# EUROPÄISCHE PATENTSCHRIFT

(11) **EP 3 161 411 B1**
(45) Veröffentlichungstag und Bekanntmachung des Hinweises auf die Patenterteilung: **07.03.2018**
(21) Anmeldenummer: 15744859.8
(22) Anmeldetag: 26.06.2015
(51) Int. Cl.: G01B 11/26, B21D 5/02

(54) **VORRICHTUNG ZUM BESTIMMEN DES WINKELS ZWISCHEN ZWEI EBENEN WERKSTÜCKFLÄCHEN**
APPARATUS FOR DETERMINING THE ANGLE BETWEEN TWO PLANAR WORKPIECE SURFACES
DISPOSITIF POUR LA DÉTERMINATION DE L'ANGLE ENTRE DEUX SURFACES PLANES D'UNE PIÈCE

(30) Priorität: 27.06.2014 AT 504472014
(43) Veröffentlichungstag der Anmeldung: 03.05.2017
(73) Patentinhaber: KEBA AG, 4041 Linz (AT)
(72) Erfinder: WÖGERBAUER, Johann, 4040 Linz (AT); WÖGERBAUER, Andreas, 4040 Linz (AT)
(74) Vertreter: Patentanwaltskanzlei Hübscher
(86) Internationale Anmeldenummer: PCT/AT2015/050162
(87) Internationale Veröffentlichungsnummer: WO 2015/196230

(56) Entgegenhaltungen:
- EP-A2- 0 313 738
- JP-A- H01 199 104
- JP-A- 2002 059 217
- JP-U- S6 317 405

## Beschreibung

### Technisches Gebiet

Die Erfindung bezieht sich auf eine Vorrichtung zum Bestimmen des Winkels zwischen zwei ebenen Werkstückflächen mit einem Lasersender für einen Laserstrahl, mit einem zwischen den beiden Werkstückflächen angeordneten, zur Scheitelachse des Winkels achsparallelen und kontinuierlich umlaufenden Richtrotor mit einer zur Rotorachse senkrechten Abstrahlrichtung für den Laserstrahl, mit einer einen Empfänger für den in Abstrahlrichtung an den Werkstückflächen reflektierten Laserstrahl aufweisenden Empfangseinrichtung und mit einer an die Empfangseinrichtung angeschlossenen Auswerteschaltung.

### Stand der Technik

Um den Biegewinkel von in Abkantpressen gebogenen Blechen zu erfassen, sind unterschiedliche Messeinrichtungen bekannt, wobei die optische Erfassung üblicherweise auf der Basis eines Lichtschnittverfahrens gegenüber einer mechanischen Abtastung der Blechoberfläche den Vorteil der Verschleißfreiheit mit sich bringt. Neben den Lichtschnittverfahren ist auch ein optisches Messverfahren bekannt (EP 0 915 320 A1), bei dem auf der Außenseite eines Schenkels eines in einer Abkantpresse gebogenen Blechs ein Lasersender angeordnet ist, der um eine zur Scheitelachse des Biegewinkels parallele Achse hin- und hergeschwenkt wird, und zwar um eine Mittelstellung, die durch einen zur Schenkelfläche des Blechs senkrechten Laserstrahlverlauf bestimmt ist. Da der Lasersender symmetrisch zwischen zwei Empfängerdioden angeordnet ist, wird bei jedem Ausschwenken des Lasersenders aus der Mittelstellung des Richtrotors eine der beiden Empfängerdioden mit dem an der Schenkelfläche reflektierten Laserstrahl beaufschlagt, sodass die Signalspitzen der Empfängerdioden in Verbindung mit der zugehörigen Drehstellung des Richtrotors und damit des Lasersenders gegenüber einer definierten Referenzdrehlage den Winkel zwischen dem gesendeten Laserstrahl und einer Normalen auf die Schenkelfläche bestimmen. Da dieser Winkel vom Abstand des Lasersenders von der Schenkelfläche abhängt, werden zur Erfassung des auf die Referenzdrehlage bezogenen Drehwinkels der zur Schenkelfläche senkrechte Mittelstellung des Lasersenders die den Signalspitzen beider Empfängerdioden zugehörigen Drehwinkel des Lasersenders erfasst, sodass der Winkel der zur Schenkelfläche senkrechten Mittelstellung gegenüber der Referenzdrehlage durch die halbe Summe der beiden Drehwinkel der Empfängerdioden errechnet und daraus der Winkel zwischen der Schenkelfläche und einer durch die Referenzdrehlage festgelegten Bezugsfläche abgeleitet werden kann. Vorteilhaft bei dieser bekannten optischen Winkelerfassung einer Werkstückfläche gegenüber einer Bezugsfläche ist, dass kein Streulicht, sondern der an der Werkstückfläche reflektierte Laserstrahl zur Winkelbestimmung herangezogen wird. Nachteilig ist jedoch der dafür benötigte Aufwand, zumal zur Messung des Winkels zwischen zwei Blechschenkeln je eine Messeinrichtung für jeden Schenkel erforderlich wird.

Zur teilweisen Vermeidung dieser Nachteile ist es schließlich bekannt (JP 2002-59217 A), zwischen den beiden ebenen Werkstückflächen einen kontinuierlich umlaufenden Richtrotor mit einer zur Scheitelachse des Winkels zwischen den beiden Werkstückflächen parallelen Rotorachse vorzusehen, sodass ein zur Rotorachse koaxialer Laserstrahl durch einen unter 45° zur Rotorachse geneigten Spiegel des Richtrotors radial zur Rotorachse abgelenkt und an den Werkstückflächen in Ablenkrichtung reflektiert wird, wenn der abgelenkte Laserstrahl senkrecht auf die jeweilige Werkstückoberfläche steht. Über die zugehörige Drehstellung des Antriebmotors des Richtrotors kann dann der jeweilige Winkel zwischen den beiden Werkstückflächen in einer Auswerteschaltung ermittelt werden. Nachteilig ist allerdings der durch die Sende- und Empfangseinrichtung bedingte Konstruktionsaufwand, der im Strahlengang zwischen dem Lasersender und dem Richtrotor einen halbdurchlässigen Spiegel zum Umlenken des reflektierten Laserstrahls zur Empfangseinrichtung bedingt und damit Sonderkonstruktionen der Biegestempel von Abkantpressen erfordert, um die Messvorrichtung unterbringen zu können.

### Darstellung der Erfindung

Der Erfindung liegt somit die Aufgabe zugrunde, eine Vorrichtung zum Bestimmen des Winkels zwischen zwei ebenen Werkstückflächen so auszugestalten, dass mit vergleichsweise einfachen Konstruktionsmitteln eine hochauflösende Winkelerfassung sichergestellt werden kann.
Ausgehend von einer Vorrichtung der eingangs geschilderten Art löst die Erfindung gemäß Anspruch 1 die gestellte Aufgabe dadurch, dass der Lasersender eine Monitordiode aufweist und dass die Monitordiode den Empfänger für den reflektierten Laserstrahl bildet.
Die als Monitordioden bei Lasersendern eingesetzten Photodioden dienen üblicherweise zur Leistungsregelung der Laserdioden, weil der Photostrom dieser vom Laserlicht beaufschlagten Monitordioden von der abgestrahlten Lichtleistung der Laserdiode abhängt. Bei einem Einsatz der Monitordiode als Empfänger für den reflektierten Laserstrahl wird die Monitordiode beim Empfang eines reflektierten Laserstrahls nicht nur vom gesendeten Laserstrahl, sondern auch vom reflektierten Laserstrahl beaufschlagt, was sich in einem deutlichen Anstieg des Photostroms zeigt, sodass der Drehwinkel des Richtrotors beim Auftreten einer solchen Stromspitze der Monitordiode als Maß für die Neigung einer Normalen auf die jeweilige Werkstückfläche dienen kann. Es erübrigt sich somit eine gesonderte Empfangseinrichtung für den Laserstrahl und führt zu einer einfachen, kompakten Konstruktion, was bei den gedrängten Platzbedingungen im Bereich der Biegestempel von Abkantpressen von besonderer Bedeutung ist.
Der Richtrotor kann den Lasersender selbst aufnehmen, der dann mit dem Richtrotor umläuft. Für viele Anwendungsfälle ergeben sich allerdings einfachere Konstruktionsverhältnisse, wenn der Richtrotor lediglich eine in Richtung der Rotorachse verlaufende, ebene Reflexionsfläche für den von einem ruhenden Lasersender abgestrahlten Laserstrahl bildet, weil in diesem Fall der Lasersender und damit auch der Empfänger für den reflektierten Laserstrahl unabhängig vom Richtrotor angeordnet werden können.

Der Drehwinkel des Richtrotors ergibt sich gegenüber einer vorgegebenen Referenzdrehlage. Zu diesem Zweck kann dem Richtrotor ein von dessen Drehstellung abhängig ansteuerbarer, an die Auswerteschaltung angeschlossener Referenzsignalgeber zugeordnet werden, der bei jeder Umdrehung des Richtrotors diese Referenzdrehlage anzeigt. Obwohl unterschiedliche Referenzsignalgeber eingesetzt werden können - es kommt ja lediglich darauf an, dass die Auswerteschaltung in der Referenzdrehlage des Richtrotors mit einem diese Drehlage wiedergebenden Referenzsignal beaufschlagt wird -, ergeben sich besonders günstige Konstruktionsverhältnisse, wenn der Laserstrahl selbst den Referenzsignalgeber ansteuert. Hierfür kann ein Spiegel dienen, der den gesendeten Laserstrahl zur Monitordiode reflektiert, wobei eine gegenüber dem Photostrom zufolge eines an der Werkstückfläche reflektierten Laserstrahls deutlich höhere Photostromspitze auftritt. Wird ein Richtrotor mit einer Spiegelfläche zur Umlenkung des von einem ruhenden Lasersender abgestrahlten Laserstrahls eingesetzt, so kann diese Spiegelfläche zur Erzeugung des Referenzsignals genützt werden.

Besonders einfache Auswertekriterien der Messdaten ergeben sich, wenn die Auswerteschaltung einen durch den Referenzsignalgeber ansteuerbaren, getakteten Zähler aufweist, sodass jede Umdrehung des Richtrotors in Zählschritte unterteilt wird, die je einem Drehschritt des Richtrotors und damit einem Winkelinkrement entsprechen. Der jeweilige Zählerstand gibt somit den jeweiligen auf die Referenzdrehlage bezogenen Drehwinkel des Richtrotors an, wobei die Differenz der Zählerstände für die Drehlagen der in Richtung der abgestrahlten Laserstrahlen empfangenen reflektierten Laserstrahlen ein unmittelbares Maß für den zu messenden Winkel zwischen den beiden Werkstückflächen darstellt.

### Kurze Beschreibung der Zeichnung

In der Zeichnung ist der Erfindungsgegenstand beispielsweise dargestellt. Es zeigen
- Fig. 1: eine erfindungsgemäße Vorrichtung zum Bestimmen des Winkels zwischen zwei ebenen Werkstückflächen in einer schematischen stirnseitigen Ansicht,
- Fig. 2: diese Vorrichtung in einer schematischen Seitenansicht,
- Fig. 3: eine der Fig. 2 entsprechende Darstellung einer Konstruktionsvariante einer erfindungsgemäßen Vorrichtung und
- Fig. 4: ein Blockschaltbild einer Auswerteschaltung für die erfindungsgemäße Vorrichtung.

### Weg zur Ausführung der Erfindung

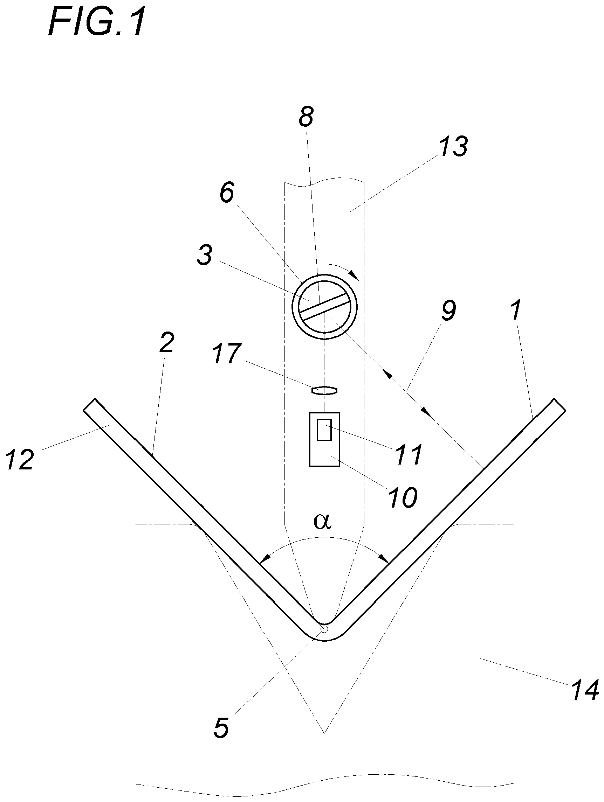

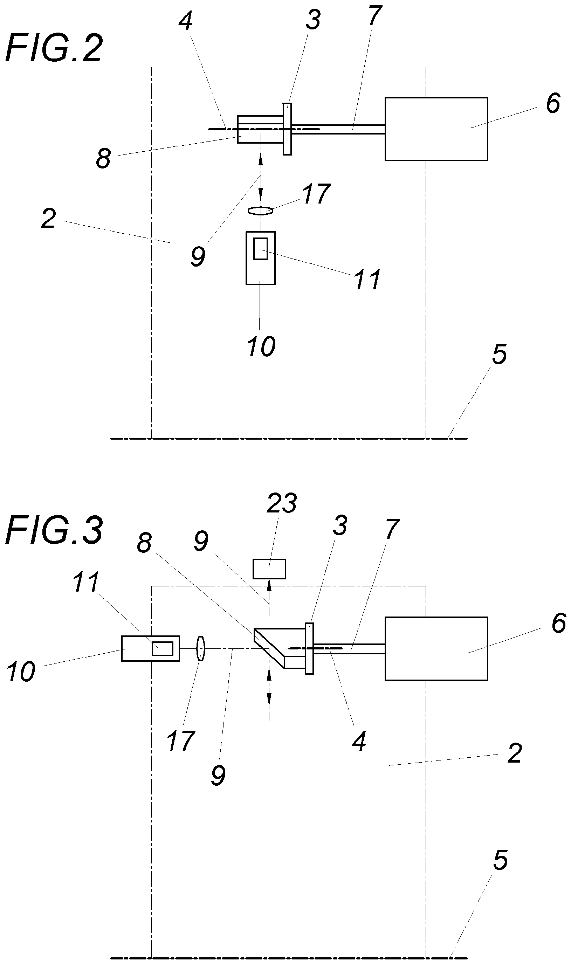

Wie insbesondere den Fig. 1 und 2 entnommen werden kann, weist eine erfindungsgemäße Vorrichtung zum Bestimmen des Winkels α zwischen zwei ebenen Werkstückflächen 1, 2 einen Richtrotor 3 auf, dessen Achse 4 parallel zur Scheitelachse 5 des zu messenden Winkels α verläuft. Im dargestellten Ausführungsbeispiel weist der von einem Motor 6 über eine Welle 7 antreibbare Richtrotor 3 eine in Richtung der Rotorachse 4 verlaufende, ebene Reflexionsfläche 8 für einen Laserstrahl 9 auf, der von einem ruhenden Lasersender 10 abgestrahlt wird und gebündelt auf die Reflexionsfläche 8 des Richtrotors 3 trifft, um an der Reflexionsfläche 8 gespiegelt zu werden. Der von der Reflexionsfläche 8 abgestrahlte Laserstrahl 9 überstreicht die beiden Werkstückflächen 1, 2 entlang von zur Scheitelachse 5 senkrechten, sich in der Scheitelachse 5 schneidenden Geraden, die zwischen sich den Winkel α einschließen. Der auf die Werkstückflächen 1 auftreffende, von der Reflexionsfläche 8 des Richtrotors 3 abgestrahlte Laserstrahl 9 wird an der jeweiligen Werkstückfläche 1, 2 reflektiert. Es wird ausschließlich der in Richtung des auf die Werkstückflächen 1, 2 auftreffenden Laserstrahls 9 reflektierte Laserstrahl 9 für die Winkelbestimmung über eine Empfangseinrichtung 11 ausgewertet, die entsprechend der Erfindung dem Lasersender 10 zugeordnet ist, um besonders einfache Konstruktionsvoraussetzungen zu schaffen.

Wie sich aus der Fig. 1 unmittelbar ergibt, wird der auf die Werkstückflächen 1, 2 auftreffende Laserstrahl 9 nur dann in Richtung des auftreffenden Laserstrahls 9 reflektiert, wenn der Laserstrahl 9 senkrecht zur Werkstückfläche 1, 2 verläuft. Die Drehlage des Richtrotors 3 beim Empfang des an den Werkstückflächen 1, 2 reflektierten Laserstrahls 9 ist daher kennzeichnend für die jeweilige Neigung der Werkstückflächen 1, 2. Da die senkrecht zu den Werkstückflächen 1, 2 verlaufenden Laserstrahlen 9 zwischen sich den zu messenden Winkel α zwischen den Werkstückflächen 1, 2 einschließen, wird durch die Drehlagen des Richtrotors 3, die den zu den Werkstückflächen 1, 2 senkrechten Laserstrahlen 9 entsprechen, der Winkel α zwischen den Werkstückflächen 1, 2 wiedergegeben, was in einfacher Weise messtechnisch ausgewertet werden kann.

In der Fig. 1 ist der Einsatz einer erfindungsgemäßen Messvorrichtung zur Bestimmung des Biegewinkels α zwischen den Schenkeln eines Blechs 12 angedeutet, das mit Hilfe eines Stempels 13 in eine Matrize 14 einer Abkantpresse gedrückt wird. Obwohl diese Anwendung ein bevorzugtes Einsatzgebiet darstellt, ist die Erfindung selbstverständlich nicht auf Abkantpressen beschränkt, sondern kann überall dort vorteilhaft genützt werden, wo es gilt, den Winkel zwischen zwei ebenen Werkstückflächen 1, 2 berührungslos zu messen.

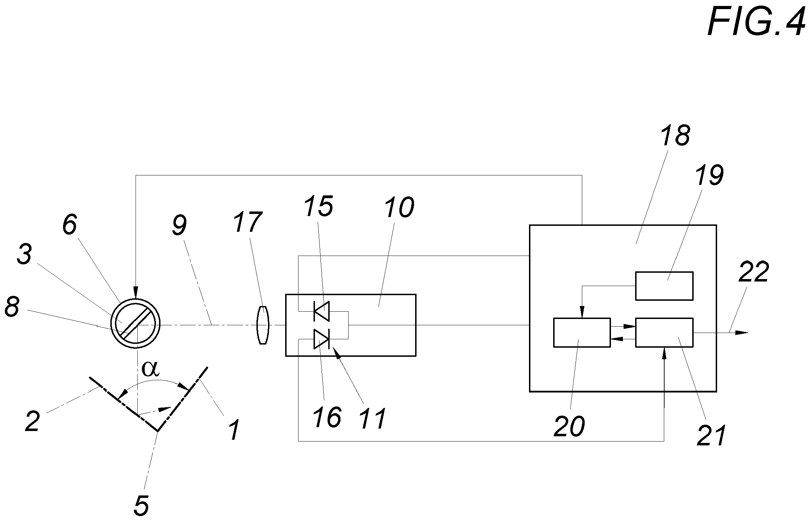

Da der Lasersender 10 neben der Laserdiode 15 eine Monitordiode 16 aufweist, kann diese Monitordiode 16 als Empfänger für den reflektierten Laserstrahl 9 verwendet werden, wie dies in der Fig. 4 angedeutet wird. Die Laserdiode 15 ist im Wesentlichen als Punktquelle zu betrachten, sodass das abgestrahlte Laserlicht in herkömmlicher Weise mit Hilfe einer Kollimationsoptik 17 zum Laserstrahl 9 zu bündeln ist. Da die Monitordiode 16 als Empfänger für den reflektierten Laserstrahl 9 genützt wird, beaufschlagt der an den Werkstückflächen 1, 2 reflektierte Laserstrahl 9 die Monitordiode 16 zusätzlich, sodass eine den Photostrom zufolge der Beaufschlagung durch die Laserdiode 15 überragende Photostromspitze auftritt, die den Empfang des an den Werkstückflächen 1, 2 reflektierten Laserstrahls 9 wiedergibt. Aus den zugehörigen Drehlagen des Richtrotors 3 kann somit der Winkel α zwischen den Werkstückflächen 1 und 2 in einfacher Weise angegeben werden.

Zu diesem Zweck ist die Drehlage des Richtrotors 3 auf eine Referenzdrehlage zu beziehen. Hierfür ist ein Referenzsignalgeber vorzusehen, der in vorteilhafter Weise durch den Laserstrahl 9 selbst beaufschlagt werden kann. Da der reflektierte Laserstrahl 9 von der Monitordiode 16 erfasst wird, kann die Monitordiode 16 auch als Referenzsignalgeber genützt werden. In der Drehlage des Richtrotors 3, in der die Reflexionsfläche 8 senkrecht zu dem vom Lasersender 10 abgestrahlten Laserstrahl 9 steht, wird nämlich der vom Lasersender 10 abgestrahlte Laserstrahl 9 unmittelbar von der Reflexionsfläche 8, einem Spiegel, zurückreflektiert, sodass die Monitordiode 16 mit einer im Vergleich zu den an den Werkstückflächen 1, 2 reflektierten Laserstrahlen erheblich höheren Lichtleistung beaufschlagt wird. Die daraus resultierende Photostromspitze hebt sich daher deutlich von den für die Winkelmessung relevanten Photostromspitzen ab. Die durch die Drehlage mit einer zur Empfangsachse des Laserstrahls 9 senkrechten Ausrichtung der Reflexionsfläche 8 bestimmte Referenzdrehlage dient als Ausgangsdrehlage für die Winkelbestimmung.

Besonders einfache Auswertemöglichkeiten ergeben sich, wenn gemäß der Fig. 4 die Auswerteschaltung 18, die den Motor 6 für den Richtrotor 3 und den Lasersender 10 ansteuert, einen über einen Oszillator 19 getakteten Zähler 20 aufweist, der jeweils über den Referenzsignalgeber rückgesetzt wird. Zu diesem Zweck wird das Ausgangssignal der Monitordiode 16 nach einer entsprechenden Verstärkung und Aufbereitung einer Rechnereinheit 21 zugeführt, in der bestimmt wird, ob das von der Monitordiode 16 empfangene Signal dem Referenzsignal oder einem Messsignal aufgrund des empfangenen, an den Werkstückflächen 1, 2 reflektierten Laserstrahls 9 entspricht. Mit dem Auftreten eines Referenzsignals wird der Zähler 20 neu gestartet und zählt die getakteten Zählschritte während eines Umlaufs des Richtrotors 3. Beim Auftreten eines Messsignals wird der jeweilige Zählerstand ausgelesen, der der Summe der bis dahin gezählten Zählschritte entspricht, die aufgrund eines kontinuierlichen Umlaufs des Richtrotors 3 Winkelinkrementen gleichgesetzt werden können. Um den Winkel α zwischen den beiden Werkstückflächen 1 und 2 zu erfassen, ist es daher lediglich erforderlich, die Differenz der auf die Referenzdrehlage bezogenen Drehwinkel zu bilden, die durch den Empfang des reflektierten Laserstrahls 9 bestimmt werden.

Um beispielsweise den Winkel α bis auf Zehntel eines Grads genau bestimmen zu können, ist der Zähler während eines Umlaufs des Richtrotors 3 mindestens 7200-mal zu takten. Bei einem Umlauf von 360° erfordert die Erfassung von Zehntelgraden zumindest 3600 Zählschritte. Da der von einer Reflexionsfläche 8 abgestrahlte Laserstrahl 9 gegenüber der Winkelgeschwindigkeit des Richtrotors 3 eine doppelte Winkelgeschwindigkeit aufweist, ist diese Zahl der Zählschritte zu verdoppeln, sodass für dieses Beispiel zumindest 7200 Zählschritte zu fordern sind. Bei einer größeren Anzahl an Zählschritten entspricht der 7200. Teil der Zählschrittanzahl einem Zehntelgrad. Für die Bestimmung des Winkels α zwischen den beiden Werkstückflächen 1, 2 ist somit lediglich die Differenz zwischen den Zählschrittzahlen für die Drehlagen des Richtrotors 3 zu bilden, in denen der Laserstrahl 9 senkrecht zu den Werkstückflächen 1, 2 verläuft. Der Winkelwert kann dann über die Rechnereinheit 21 unmittelbar über den Ausgang 22 ausgelesen werden.

Die Ausführungsform nach der Fig. 3 zeigt, dass als Reflexionsfläche 8 des Richtrotors 3 auch ein Prisma eingesetzt werden kann, über das eine zusätzliche Umlenkung des gesendeten wie des empfangenen Laserstrahls möglich ist, beispielsweise um einen gesonderten Referenzimpulsgeber 23 für eine bestimmte Referenzdrehlage vorsehen zu können. Dieser Referenzimpulsgeber 23 wird vom Laserstrahl 9 in der vorgesehenen Referenzdrehlage des Richtrotors 3 beaufschlagt.

## Patentansprüche

1. Vorrichtung zum Bestimmen des Winkels (α) zwischen zwei ebenen Werkstückflächen (1, 2) mit einem Lasersender (10) für einen Laserstrahl (9), mit einem zwischen den beiden Werkstückflächen (1, 2) angeordneten, zur Scheitelachse (5) des Winkels (α) achsparallelen und kontinuierlich umlaufenden Richtrotor (3) mit einer zur Rotorachse (4) senkrechten Abstrahlrichtung für den Laserstrahl (9), mit einer einen Empfänger für den in Abstrahlrichtung an den Werkstückflächen (1, 2) reflektierten Laserstrahl (9) aufweisenden Empfangseinrichtung (11) und mit einer an die Empfangseinrichtung (11) angeschlossenen Auswerteschaltung (18), **dadurch gekennzeichnet, dass** der Lasersender (10) eine Monitordiode (16) aufweist und dass die Monitordiode (16) den Empfänger für den reflektierten Laserstrahl (9) bildet.

2. Vorrichtung nach Anspruch 1, **dadurch gekennzeichnet, dass** der Richtrotor (3) eine in Richtung der Rotorachse (4) verlaufende, ebene Reflexionsfläche (8) für den vom ruhenden Lasersender (10) abgestrahlten Laserstrahl (9) bildet.

3. Vorrichtung nach Anspruch 1 oder 2, **dadurch gekennzeichnet, dass** dem Richtrotor (3) ein von dessen Drehstellung abhängig ansteuerbarer, an die Auswerteschaltung (18) angeschlossener Referenzsignalgeber (23) zugeordnet ist.

4. Vorrichtung nach Anspruch 3, **dadurch gekennzeichnet, dass** die Auswerteschaltung (18) einen durch den Referenzsignalgeber (23) ansteuerbaren, getakteten Zähler (20) aufweist.

## Claims

1. Device for determining the angle (α) between two planar workpiece surfaces (1, 2), having a laser transmitter (10) for a laser beam (9), a continuously rotating straightening rotor (3), which is disposed between the two workpiece surfaces (1, 2), is axially parallel to the vertex axis (5) of the angle (α) and has a radiation direction for the laser beam (9) perpendicular to the rotor axis (4), and a receiving device (11) comprising a receiver for the laser beam (9) reflected on the workpiece surfaces (1, 2) in the radiation direction, and an evaluation circuit (18) connected to the receiving device (11), **characterised in that** the laser transmitter (10) comprises a monitor diode (16) and that the monitor diode (16) forms the receiver for the reflected laser beam (9).

2. Device as claimed in claim 1, **characterised in that** the straightening rotor (3) forms a planar reflection surface (8), which extends in the direction of the rotor axis (4), for the laser beam (9) radiated by the static laser transmitter (10).

3. Device as claimed in claim 1 or 2, **characterised in that** the straightening rotor (3) is allocated a reference signal transmitter (23) which can be actuated in dependence upon the rotational position of the straightening rotor and is connected to the evaluation circuit (18).

4. Device as claimed in claim 3, **characterised in that** the evaluation circuit (18) comprises a clocked counter (20) which can be actuated by the reference signal transmitter (23).

## Revendications

1. Dispositif pour la détermination de l'angle (α) entre deux surfaces (1, 2) planes d'une pièce, avec un émetteur laser (10) pour un rayon laser (9), avec un rotor de redressage (3) disposé entre les deux surfaces (1, 2) de pièce, parallèle à l'axe (5) du sommet de l'angle (α) et tournant en continu avec un sens d'émission pour le rayon laser (9) perpendiculaire à l'axe du rotor (4), avec un dispositif de réception (11) comportan un récepteur pour le rayon laser (9) réfléchi dans le sens d'émission sur les surfaces (1, 2) de la pièce et avec une commutation d'évaluation (18) reliée au dispositif de réception (11), **caractérisé en ce que** l'émetteur laser (10) présente une diode de contrôle (16) et **en ce que** la diode de contrôle (16) forme le récepteur pour le rayon laser réfléchi (9).

2. Dispositif selon la revendication 1, **caractérisé en ce que** le rotor de redressage (3) forme une face de réflexion (8) plane, passant dans le sens de l'axe du rotor (4), pour le rayon laser (9) émis par l'émetteur laser (10) statique.

3. Dispositif selon la revendication 1 ou 2, **caractérisé en ce qu'**un générateur de signal de référence (23) relié à la commutation d'évaluation (18) pouvant être commandé en fonction de sa position de rotation est associé au rotor de redressage (3).

4. Dispositif selon la revendication 3, **caractérisé en ce que** la commutation d'évaluation (18) comporteun compteur (20) cadencé, pouvant être commandé par le générateur de signal de référence (23).
